# EUROPEAN PATENT SPECIFICATION

(11) **EP 2 770 717 B1**
(45) Date of publication and mention of the grant of the patent: **29.06.2016**
(21) Application number: 14460011.1
(22) Date of filing: 25.02.2014
(51) Int. Cl.: H04M 11/06

(54) **Method for migrating VHBB services from ADSL/2/2+ technique to VDSL2 Technique**
Verfahren zur Migration von VHBB-Diensten aus ADSL/2/2+-Technik auf VDSL2-Technik
Procédé de migration de services VHBB à partir de la technique ADSL/2/2+ vers la technique VDSL2

(30) Priority: 26.02.2013 PL 40292013
(43) Date of publication of application: 27.08.2014
(73) Proprietor: Orange Polska S.A., 02-326 Warszawa (PL)
(72) Inventor: Obrycki, Piotr, 18-400 Lomza (PL); Ratkiewicz, Marcin, 02-732 Warszawa (PL); Zych, Piotr, 38-480 Klimkówka (PL); Zawadzki, Konrad, 03-149 Warszawa (PL); Ladny, Tomasz, 03-137 Warszawa (PL)
(74) Representative: Wazynska, Miroslawa

(56) References cited:
- WO-A2-02/11418
- US-A1- 2004 196 912
- US-A1- 2007 223 568
- US-A1- 2008 219 290
- "TR-198 DQS: DQM systems functional architecture and requirements ; siepon_1306_LS_BBF_incoming_attach3_TR198i 2", IEEE DRAFT; SIEPON_1306_LS_BBF_INCOMING_ATTACH3_TR198I 2, IEEE-SA, PISCATAWAY, NJ USA, vol. 802.1, 1 November 2012 (2012-11-01), pages 1-73, XP068050877,

## Description

The object of the invention is a method for migrating VHBB services from ADSL/2/2+ technique to VDSL2 technique, in particular from ADSL, ADSL2 and ADSL2+ technique, of services of a very high speed broadband (VHBB) from Asymmetric Digital Subscriber Line technique (ADSL and its subsequent versions ADSL2 and ADSL2+, ADSL/2/2+) to Very High Speed Digital Subscriber Line (DSL, VDSL2) technique.

Development of Integrated Services Digital Network (ISDN) made it necessary to extend digital transmission also to subscriber link in telephone network, the subscriber link having been so far only an analogue link, and to develop new rules for signalling in this link. Development of rules of digital transmission over the subscriber link allowed implementation of digital subscriber access. Digital Subscriber Line, i.e. DSL, belongs to the family of technologies of broadband access to the Internet and is a technology that enables transmission of voice, video and data via existing telephone lines. DSL technology has a lot of varieties coming under a common name - xDSL, a part of them being symmetric, and the other part asymmetric. The symmetry of xDSL implies an identical bit rate in both directions: to the subscriber and from the subscriber. ADSL is Asymmetric Digital Subscriber Line technique, which enables transmission at an overall rate - sum of rates to the client and from the client - of up to 13 Mbit/s, ADSL2 is Asymmetric Digital Subscriber Line technique, which enables transmission at an overall rate of up to 16 Mbit/s, ADSL2+ is Asymmetric Digital Subscriber Line technique, which enables transmission at an overall rate of up to 25 Mbit/s, and VDSL2 is Very High Speed Digital Subscriber Line technique, which enables transmission with a pair of copper wires at an overall rate of up to 200 Mbit/s.

From the publication WO01/67804A2, a programmable access architecture is known, the architecture consisting of two types of cards: a generic line card which provides analogue access (front end) to various services (POTS, ADSL/2/2+, VDSL) and a digital processing card which can be configured using an application adapted to a particular service. Cards interact with each other to provide remote configuration of the user port without additional costs associated with sending a service technician to work. Card configuration is associated with downloading digital signals into the memory of application processor for a corresponding service. The solution requires intervention, in the application of memory of processor of digital signals and work on a defined type of service.

From US7756161B2, a method is known for hybrid access for xDSL technology families, i.e. VDSL and ADSL/2/2+, using modification of protocols in DSL access multiplexer (DSLAM). It is possible to read, in one device, ATM cells (for ADSL/2/2+), i.e. a message format of the physical layer of asynchronous transfer mode and, for VDSL2, PTM packets (packet transfer mode). Due to the modification of protocols in the DSLAM, there is no need to replace CPE devices (Customer premises equipment, client terminals, e.g. ADSL2+ modems). However, this solution requires intervention in the protocol layer of xDSL transmission.

From patent application US20090262791A1, a control system for switching between different xDSL configurations (signals) (among others ADSL, VDSL, VDSL2) is known. By means of a control signal, suitable DSL configuration in the system is selected. Upon receipt of the control signal and switching, the system transmits the signal further to the modem. This solution requires using an additional device based on operational amplifier, which is an amplifier switched with the control signal. In addition to the need for "inserting", into the line, of another element, the control is analogue, through transmission before switching the control signal in the line.

Migration of services in communication systems can also be implemented with the use of available management systems supplied with the access multiplexers. In the case of their use, there is a possibility to perform migration between ADSL/2/2+ and VDSL2 techniques, based on identification parameters of modems, but in this case the operation must be performed manually. The system operator must check the value of each parameter. On the basis of their values, decision to change the port configuration must be taken and the operation must be performed manually using for example the management system. [pages 3A, 3B, 3C, 3D] In contrast to the invention applied, the above operations performed entirely manually are ineffective in production networks.

The use of the method according to the invention allows automation of the method of service migration from ADSL/2/2+ access techniques to VDSL2 technique, providing access to broadband services of severalties higher bit rates. This enables, without any need for intervention of maintenance stuff, to change the transmission mode, thereby significantly expanding the range of service capabilities of a given line.

Additionally, use of the method according to the invention causes reduction of costs of network maintenance by minimising the number of interventions of maintenance stuff related to the need to switch the wiring and to

From patent application WO 02/11418 A2 a system for handshaking modems over communications network for use with xDSL modem, cable modem, voice-band modem which recognizes modified capability indicator and in response, transmits response signal over selected carrier frequency is known. The invention provides a device to handshake or initialize communication devices that operate in different frequency bands. It allows new xDSL technologies, such as but not limited to VDSL, to handshake while retaining backward compatibility with previous handshaking methods such as but not limited to ITU-T Recommendation G.994.1. It provides parameters for handshaking messages that are specific to VDSL technologies. In an embodiment, a central office modem configured to operate using VDSL technology provides capability indicators to the remotely located modem that indicate the central office modem is able to use the VDSL bidirectional frequencies.

TR-198 is a component of the DQS (DSL Quality Suite) which is an ongoing initiative of the Broadband Forum to identify the building blocks (reference features and tools, equipment and system requirements, network strategies and practices) to be used by manufacturers and Service Providers to develop solutions that enable pro-active and efficient maintenance of broadband lines and services. DSL Quality Management (DQM) encompasses a range of techniques that seek to monitor, analyse and improve performance and/or stability of a DSL line or a group of DSL lines.
TR-198 DQS: DQM systems functional architecture and requirements specify the architecture, and the functional and performance requirements for DQM systems. It provides an architecture that identifies the key functions of a DQM system and the external functions it depends on and to which it delivers its output. The requirements for each functional block are given. Interfaces between the functional blocks and between the functional blocks and the external functions arc identifed. Existing standards that are relevant to these interfaces are indicated and the need for new standardized interfaces is identified. Requirement on the interfaces are listed. TR-198 is focused on DSL technologies that are currently addressed by G.997.1.

From patent application US 2007/0223568 A1 a computer program for accessing digital subscriber line performance data, which has instructions to collect real-time performance data for digital subscriber line at network end of digital subscriber line in response to interrogation request is known. The program also has instructions to convert collected real-time performance data to analyzed performance data, and instructions to transmit the analyzed performance data to the user device over the wireless network. In this application a method and system for managing performance data of communication lines, such as digital subscriber lines (DSL), is disclosed. The method includes receiving from a remotely used device an identifier for a particular communications line at a web server; initiating a real-time performance analysis of the line at a network end of the line; receiving real-time performance data and converting the real time performance data to analyzed data; receiving field performance data from the user device; and converting at least one of the field performance data and the real-time performance data from a web-based format to a mainframe format; and sending the converted data to a mainframe for storage corresponding to a file associated with the identifier. The advantage of this invention is to enable reliably accessing new and historical line performance data and communicating the field test results to the backend systems, such as mainframes.

From patent application US 2008/0219290 A1 a digital subscriber line system configuration method involves determining whether digital subscriber line system (DSL system) is capable of operating with selected profile is known. Configuration or otherwise controlling parameters of a DSL system related to power, band usage and margin is based on collected operational data. Operational data are collected from at least one DSL system operating under a known configuration and/or a profile. The profile is selected based on binder-level information. A control unit determines whether the DSL system is capable of operating with the selected profile, based on collected operational data such as band preference indication, margin cap mode indication, service priorities pertaining to net data rate, current data rate, channel attenuation per tone, maximum attainable data rate, average attenuation, and transition rules. The DSL system is operated with the selected profile, based on the determination result. The invention allows users to adjust and adapt transmission power margins, and power spectral densities dynamically corresponding to changing DSL environmental and operational situations.

From patent application US 2004/0196912 A1 symmetric extended digital subscriber line modem configuring process for telecommunication application, involving switching off number of carriers to establish asymmetric functioning mode in response to detection of preset key is known. The process provides high flexibility of functioning for the access to a broad band network and enables new possibilities of services for the operators of telecommunication. The process for configuring an xDSL-type symmetric modem, comprising the following: detecting a predetermined criterion corresponding to an asymmetric operating mode, in particular an ADSL-type; and in response to said detection, disabling a number of carriers in order to establish an asymmetric operating mode. More specifically, the modem is VDSL-type and being reconfigurable in ADSL mode. In one case, said criterion is the detection of signals as defined in recommendation G.994.1 of the International Telecommunications Union of (ITU). Alternatively, mode switching could be controlled based on measurement of the size of the line. In other words, the invention discloses a method for dynamically switch from ADSL operation towards only VDSL operation where VDSL modem is in downward interoperability mode and shows how to choose best mode when there is a possibility to enable all of them at one time. ensure unification of equipment used in the network, which results in simpler and less expensive rules for hardware management.

Lack of access to services during the migration process, resulting from different techniques supported by the modem and the access multiplexer, is also shortened, thereby a continuous provision of services until the delivery of new equipment (VSDL2 modem) to the subscriber is completed.

The invention is applicable in access network of telecommunications operators who provide at least services of access to the Internet using ADSL/2/2+ technique and have the ability to run services based on VDSL2 technique.

Summing up, the objects of the invention include:
- automation of the installation process;
- minimisation of costs associated with the number of necessary Technicians interventions;
- shortening of the lack of access to services period during migration process from the family of ADSL/2/2+ techniques to VDSL2;
- ensuring the maximum reliability of the data collected and of the results based thereon;
- complete information about performed steps of the procedure;
- unification of the reporting mechanism;
- building a full history of particular subscriber lines, enabling subsequent decisions about how to maintain, repair and extend them in the future;
- rapid deployment of support for new techniques, services, procedures;
- adaptation to local environmental conditions of the operator,
- minimisation of arbitrary installation steps performed by Technicians.

The object of the invention is a method for migrating VHBB services from ADSL/2/2+ technique to VDSL2 technique, which is characterised in that the VDSL2 port in Backward Compatibility mode, with the connected modem in ADSL/2/2+ technique is monitored by the access multiplexer, and after connection of the VDSL2 technique modem to the VDSL2 port, at the level of DSL physical layer, the modem is synchronised with the access multiplexer, then at least one modem identification parameter is transmitted from the modem to the access multiplexer, at the level of the access multiplexer, the type of modem is verified, and after confirmation of the modem change, the VDSL2 port operating mode is changed with the use of the access multiplexer by leaving Backward Compatibility mode.

Preferably, a serial number is used as the identification parameter; further preferably a serial number with a specific pattern of its notation being used.

Preferably, a software version of the modem is used as the identification parameter.

Preferably, a firmware version of the modem is used as the identification parameter.

Further preferably, a transmission capabilities parameter of xTU-R modem is used as the identification parameter.

Preferably, a parameter that uniquely identifies the modem, available at the level of the access multiplexer, is used as the identification parameter.

Preferably, communication between the modem and the access multiplexer is effected by means of any communication channel, and further preferably Embedded Operations Channel, EoC, is used as the communication channel, and DSL physical layer protocol.

Communication between the modem and the access multiplexer is preferably effected by means of a data link layer protocol, and additionally Ethernet protocol being used as the data link layer protocol, and the modem's Media Access Control address is used as the identification parameter.

Monitoring is preferably performed every 5 minutes.

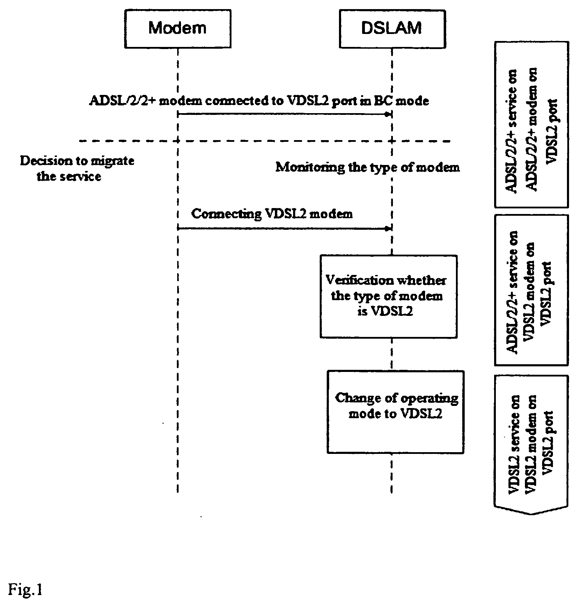

The object of the invention is shown in the drawing, where Fig.1 presents a diagram of the method according to the invention with the use of the access multiplexer (DSLAM).

The implementation of the method involves the assumption that VDSL2 cards have Backward Compatibility (BC) functionality, i.e. they are compatible with previous versions, enabling to establish a connection with the use of ADSL/2/2+ technique. Communication which uses feedback information is implemented in accordance with the recommendations of Telecommunication Standardisation Sector of the International Telecommunications Union (ITU-T).

According to the method presented in Fig.1, a low bit rate service subscriber (ADSL/2/2+) is connected to DSL access multiplexer with VDSL2 card at the port operating in Backward Compatibility mode. Having ADSL/2/2+ modem, the subscriber achieves synchronisation and has the services of bit rates characteristic for the family of ADSL/2/2+ techniques provided. Setting up the synchronisation consists of exchanging control signals for establishing rules for effecting time-dependent exchange, of signals between the participating devices, i.e. two devices communicating with each other, through a physical communication medium. For the devices of xDSL systems, the exchange of signals is performed automatically between the modem and the access multiplexer. Multiplexer and modem configuration set up is a technical operation performed by maintenance stuff by means of applications provided by equipment suppliers or by means of text commands. Synchronisation implies conducting the exchange of signals in accordance with the rules established in the process of synchronisation. The term synchronisation also refers to maintaining the synchronisation (after setting up the synchronisation). Information on the presence of the synchronisation is very important because it confirms the functioning of services. In the case of decision to migrate the service to a service based on the VDSL2 technique, the access multiplexer starts to monitor the port every 3 minutes. Monitoring implies a structured process of controlling selected parameterised values, performed continuously or periodically. Technical operations necessary for the cyclic monitoring include cyclic transmission of selected parameters for monitoring (cyclic running of the parameter transmission). In order to transfer the selected parameters a technical action - appropriate configuration of devices before establishing the synchronisation - is required. This is essential because only certain standards ensure the ability to transmit necessary parameters (like for example a serial number). In the configuration of devices, it is necessary to indicate a support for the family of ADSL/2/2+ and VDSL2 standards. Monitoring includes a parameter that uniquely identifies the modem, available at the level of the access multiplexer. This parameter is automatically transmitted from the modem to the access multiplexer (DSLAM) through Ethernet protocol. After connection of the VDSL2 technique modem to VDSL2 port, synchronisation of the modem with DSLAM occurs at the level of physical layer. Subsequently, from the modem to DSLAM, transmission of the modem identification parameter takes place, i.e. the parameter that uniquely identifies the modem, such as the modem's serial number, available at the level of the access multiplexer. Transmission of a parameter consists of preparing and transmitting, by the communication medium, an appropriately processed signal which carries information on the parameter value. Transmission of the identification parameter is a technical operation which consists of transmitting a specific parameter used to recognise a transmitting device through a receiving device. Type of modem is verified at the level of the access multiplexer. Verification of the type of modem consists of compiling values of the transmitted modem identification parameters, i.e. values carried by appropriate signals. In this case, this is a serial number, for determining a match which is equivalent to compatibility of the verified device with the expected type, or for determining a mismatch which is equivalent to incompatibility of the verified device with the expected type. Technical operations performed in this step include verification of the parameter value, compiling it with established patterns and issuing a verdict. After confirmation of modem change, the access multiplexer changes the operating mode of VDSL2 by leaving the BC functionality, which allows running VDSL2 full mode. The change in the operating mode consists of switching from BC mode (synchronisation mode in ADSL/2/2+ technique) to VDSL2 mode. The change of mode is a technical operation performed by DSLAM as a change of configuration of physical layer and data link layer. On the physical layer, DSLAM configures handling of VDSL2 technique (i.e. transmission in the band of 17 MHz; in Poland, 17A profile is mainly used). Besides, on the physical layer, DSLAM configures the parameters defined in ITU-T G.993.2 standard (for example minimum/maximum bit rate of the link, minimum Impulse Noise Protection [INP], maximum transmission delay, minimum, expected and maximum level of noise margin), which are essential to run the transmission in VDSL2 mode.

As a result of automatic reconfiguration, after connection of the VDSL2 modem, an automatic, immediate switching from BC mode to VDSL2 mode occurs, which constitutes final result of the method according to the invention. Thereby, having connected the VDSL2 modem, it is not necessary to wait for this switching to be performed manually. This increases the quality of services provided (including the quality of the migration process) and reduces the necessary human activity because the whole switching process is performed according to the invention.

In another embodiment of this method, the transmitted identification parameters include - transmission capability parameter of xTU-R modem and modem's Media Access Control (MAC) address, being a hardware address which is a unique technical representation of the device, the representation being a combination of signals and their values. The use of MAC requires configuring the device before achieving the synchronisation. Communication between the modem and DSLAM is effected through Embedded Operations Channel (EoC) and DSL physical layer protocol, and data link layer by means of Ethernet protocol. Application of the protocol implies the use of a standard information transfer protocol as a set of operating modes of communication devices and as a set of rules for exchange and create signals, with appropriate physical characteristics assigned. Ethernet protocol is used as a communication medium. Protocol, that enables operation of the invention, is used by devices solely upon appropriate configuration of the devices, before achieving their synchronisation.

## Claims

1. A method for migrating very high speed broadband VHBB services from ADSL/2/2+ technique to VDSL2 technique, in which a port is reconfigured into VDSL2 mode by means of DSL system elements, including an access multiplexer and a modem, **characterised in that** a VDSL2 port in a Backward Compatibility mode, with connected modem in ADSL/2/2+ technique is monitored by the access multiplexer, and after connection of a VDSL2 technique modem to the VDSL2 port, at the level of DSL physical layer, the modem is synchronised with the access multiplexer, then at least one modem identification parameter is transmitted from the modem to the access multiplexer, at the level of the access multiplexer the type of modem is verified, and after confirmation of the modem change, VDSL2 port operating mode is changed with the use of the access multiplexer by leaving the Backward Compatibility mode.

2. The method according to claim 1, **characterised in that** a serial number is used as the identification parameter.

3. The method according to claim 2, **characterised in that** a serial number with a specific pattern of notation is used as the identification parameter.

4. The method according to claim 1, **characterised in that** a software version of the modem is used as the identification parameter.

5. The method according to claim 1, **characterised in that** a firmware version of the modem is used as the identification parameter.

6. The method according to claim 1, **characterised in that** a transmission capabilities parameter of xTU-R modem is used as the identification parameter.

7. The method according to claim 1, **characterised in that** a parameter that uniquely identifies the modem, available at the level of the access multiplexer, is used as the identification parameter.

8. The method according to any one of claims 1 to 7, **characterised in that** communication between the modem and the access multiplexer is effected by means of any communication channel.

9. The method according to claim 8, **characterised in that** Embedded Operations Channel, EoC, is used as the communication channel, and DSL physical layer protocol.

10. The method according to any one of claims 1 to 7, **characterised in that** communication between the modem and the access multiplexer is effected by means of a data link layer protocol.

11. The method according to claim 10, **characterised in that** Ethernet protocol is used as the data link layer protocol.

12. The method according to claim 11, **characterised in that** the modem's Media Access Control address is used as the identification parameter.

13. The method according to any one of claims 1 to 12, **characterised in that** monitoring is performed every 5 minutes.

## Patentansprüche

1. Verfahren zur Migration von sehr schnellen VHBB Breitband-Diensten von der ADSL/2/2+ Technik zur VDSL2 Technik, in dem ein Port zum VDSL2 Modus mittels DSL Systemelementen rekonfiguriert wird, die einen Zugangs-Multiplexer und ein Modem beinhalten, **dadurch gekennzeichnet, dass** ein VDSL2 Port in einem Rückkompatibilitätsmodus mit angeschlossenem Modem in ADSL/2/2+ Technik durch den Zugangs-Multiplexer überwacht wird, und nach der Verbindung des VDSL2 Technik-Modems mit dem VDSL2 Port, auf der Ebene der physikalischen DSL-Schicht das Modem mit dem Zugangs-Multiplexer synchronisiert wird, und anschließend mindestens ein Modem-Identifikationsparameter vom Modem zum Zugangs-Multiplexer übertragen wird, und auf der Ebene des Zugangs-Multiplexers der Modem-Typ verifiziert wird, und nach Bestätigung der Modemänderung der VDSL2 Port-Betriebsmodus mittels des Zugangs-Multiplexers, durch das Verlassen des Rückkompatibilitätsmodus geändert wird.

2. Verfahren nach Anspruch 1, **dadurch gekennzeichnet, dass** als Identifikationsparameter eine Seriennummer verwendet wird.

3. Verfahren nach Anspruch 2, **gekennzeichnet dadurch dass**, als Identifikationsparameter eine Seriennummer mit einem bestimmten Nationsmuster verwendet wird.

4. Verfahren nach Anspruch 1, **dadurch gekennzeichnet, dass** als Identifikationsparameter die Softwareversion des Modems verwendet wird.

5. Verfahren nach Anspruch 1, **dadurch gekennzeichnet, dass** als Identifikationsparameter die Firmwareversion des Modems verwendet wird.

6. Verfahren nach Anspruch 1, **dadurch gekennzeichnet, dass** als Identifikationsparameter der Übertragungskapazitätsparameter des xTU-R Modems verwendet wird.

7. Verfahren nach Anspruch 1, **dadurch gekennzeichnet, dass** als Identifikationsparameter ein das Modem eindeutig identifizierender Parameter verwendet wird, der auf der Ebene des Zugangs-Multiplexers zugänglich ist.

8. Verfahren nach einem der Ansprüche von 1 bis 7, **dadurch gekennzeichnet, dass** die Kommunikation zwischen dem Modem und dem Zugangs-Multiplexer mittels eines jeden Kommunikationskanals zustande kommt.

9. Verfahren nach Anspruch 8, **dadurch gekennzeichnet, dass** als Kommunikationskanal der Embedded Operations Channel, EoC, und das DSL-Protokoll der physikalischen Schicht verwendet wird.

10. Verfahren nach einem der Ansprüche von 1 bis 7, **dadurch gekennzeichnet, dass** die Kommunikation zwischen dem Modem und dem Zugangs-Multiplexer mittels des Data Link Layer Protokolls zustande kommt.

11. Verfahren nach Anspruch 10, **dadurch gekennzeichnet, dass** das Ethernet Protokoll als Data Link Layer Protokoll verwendet wird.

12. Verfahren nach Anspruch 11, **dadurch gekennzeichnet, dass** als Identifikationsparameter die Media Access Control Adresse des Modems verwendet wird.

13. Verfahren nach einem der Ansprüche von 1 bis 12, **dadurch gekennzeichnet, dass** die Überwachung alle 5 Minuten durchgeführt wird.

## Revendications

1. Un procédé de migration de services de large bande à très haut débit VHBB à partir de la technique ADSL/2/2+ vers la technique VDSL2, dans lequel un port est configuré en mode VDSL2 au moyen d'éléments du système DSL, comprenant un multiplexeur d'accès et un modem, **caractérisé en ce qu'un** port VDSL2 dans un mode de compatibilité descendante, avec un modem connecté dans la technique ADSL/2/2+ est surveillé par le multiplexeur d'accès, et après la connexion d'un modem de la technique VDSL2 au port VDSL2, au niveau de la couche physique DSL, le modem est synchronisé avec le multiplexeur d'accès, puis au moins un paramètre d'identification du modem est transmis de le modem au multiplexeur d'accès, au niveau du multiplexeur d'accès le type du modem est vérifié, et après la confirmation de la modification du modem, le mode de fonctionnement du port VDSL2 est modifié à l'aide du multiplexeur d'accès en laissant le mode de compatibilité descendante.

2. Le procédé selon la revendication 1, **caractérisé en ce qu'**un numéro de série est utilisé comme paramètre d'identification.

3. Le procédé selon la revendication 2, **caractérisé en ce qu'**un numéro de série avec un schéma de notation spécifique est utilisé comme paramètre d'identification.

4. Le procédé selon la revendication 1, **caractérisé en ce qu'**une version logicielle du modem est utilisée comme paramètre d'identification.

5. Le procédé selon la revendication 1, **caractérisé en ce qu'**une version de firmware du modem est utilisée comme paramètre d'identification.

6. Le procédé selon la revendication 1, **caractérisé en ce qu'**un paramètre de capacités de transmission du modem xTU-R est utilisé comme paramètre d'identification.

7. Le procédé selon la revendication 1, **caractérisé en ce qu'**un paramètre qui identifie de manière unique le modem, disponible au niveau du multiplexeur d'accès, est utilisé comme paramètre d'identification.

8. Le procédé selon l'une quelconque des revendications 1 à 7, **caractérisé en ce que** la communication entre le modem et le multiplexeur d'accès est réalisée au moyen de n'importe quel canal de communication.

9. Le procédé selon la revendication 8, **caractérisé en ce que** de Embedded Operations chanel, EoC, est utilisé comme canal de communication, et protocole de couche physique DSL.

10. Le procédé selon l'une quelconque des revendications 1 à 7, **caractérisé en ce que** la communication entre le modem et le multiplexeur d'accès est réalisée au moyen d'un protocole de couche de liaison de données.

11. Le procédé selon la revendication 10, **caractérisé en ce que** le protocole Ethernet est utilisé comme protocole de couche de liaison de données.

12. Le procédé selon la revendication 11, **caractérisé en ce que** l'adresse de Media Access Control du modem est utilisé comme paramètre d'identification.

13. Le procédé selon l'une quelconque des revendications 1 à 12, **caractérisé en ce que** la surveillance est effectuée toutes les 5 minutes.
